# FASCICULE DE BREVET EUROPEEN

(11) **EP 3 123 255 B1**
(45) Date de publication et mention de la délivrance du brevet: **17.02.2021**
(21) Numéro de dépôt: 15725721.3
(22) Date de dépôt: 09.04.2015
(51) Int. Cl.: H04L 12/28, G05B 19/042

(54) **DISPOSITIF DE CONTRÔLE D'UN ÉQUIPEMENT ÉLECTRIQUE**
VORRICHTUNG ZUR STEUERUNG EINES TEILS EINER ELEKTRISCHEN AUSRÜSTUNG
DEVICE FOR CONTROLLING A PIECE OF ELECTRICAL EQUIPMENT

(30) Priorité: 17.04.2014 FR 1453520
(43) Date de publication de la demande: 01.02.2017
(73) Titulaire: Société Muller & Cie, 75018 Paris (FR)
(72) Inventeur: LEMAIRE, Philippe, 75018 Paris (FR); MORARD, Jean-Louis, 75018 Paris (FR); POURRAT, François, 75018 Paris (FR)
(74) Mandataire: Lavoix
(86) Numéro de dépôt international: PCT/FR2015/050943
(87) Numéro de publication internationale: WO 2015/158993

(56) Documents cités:
- WO-A1-2012/131261
- FR-A1- 2 982 346
- US-A1- 2010 262 296

## Description

La présente invention concerne des dispositifs de contrôle d'équipements thermiques, et en particulier d'appareils de chauffage de logements, notamment dans le but de réaliser des économies d'énergie.

Afin de réduire la consommation énergétique d'un logement, il peut être prévu de piloter des équipements thermiques tels qu'un système de chauffage, un ballon thermodynamique d'Eau Chaude Sanitaire (ECS), une pompe à chaleur, un système de ventilation, etc. A cet effet, une programmation préalable peut être effectuée afin de définir des périodes de présence et des périodes d'absence de l'utilisateur, ce qui permet de réduire la consigne de chauffage pendant les périodes d'absence. Alternativement, l'utilisation de fonctions intelligentes telles que la détection de présence ou la détection de fenêtre ouverte peuvent être prévues pour le contrôle de la consommation électrique des équipements thermiques. Le logement peut en outre être équipé d'un système de délestage permettant l'effacement de certains appareils de chauffage lors de périodes de pointe de consommation électrique. Un tel système de pilotage est notamment décrit dans le document FR2982346.

Dans le cadre de la rénovation de logement, de nouveaux appareils de chauffage équipés de nouveaux moyens de communication filaires, tels que des BUS ou des Fils Pilotes ou de moyens sans fil par RadioFréquence RF utilisant des protocoles bidirectionnels, peuvent cohabiter avec d'autres appareils utilisant un autre protocole bidirectionnel ou avec des appareils d'ancienne génération et avec un gestionnaire d'énergie permettant de mettre en œuvre du délestage. Ces derniers équipements peuvent utiliser des moyens de communication de type unifilaire avec des protocoles unidirectionnels permettant de communiquer des ordres différents de fonctionnement à un équipement thermique. Par exemple 6 ordres pour le Fil Pilote 6 ordres FP6 (confort, économie, arrêt, hors-gel, confort -1°C, confort -2°C).

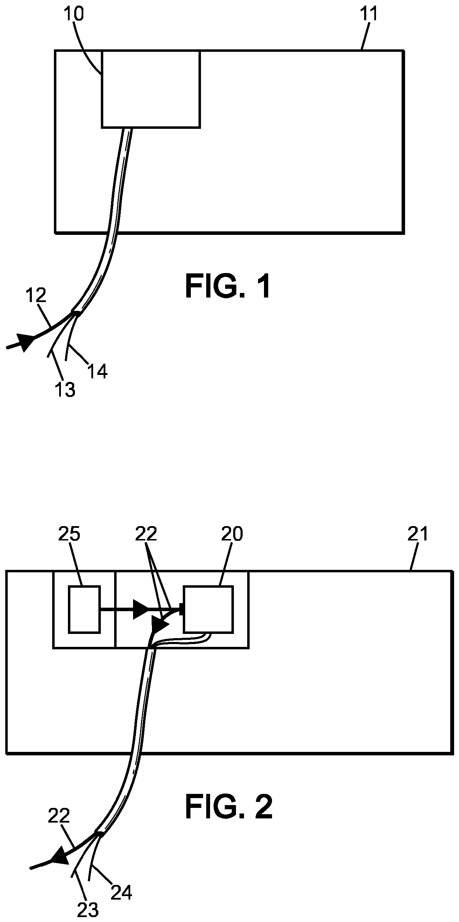

La Figure 1 présente un premier système de contrôle de la consommation électrique d'un équipement électrique 11. Un dispositif de contrôle 10, de type thermostat par exemple, est apte à recevoir des ordres via un fil pilote FP6 12 sur son entrée secteur reliée en outre à un fil de phase 13 et à un fil neutre 14.

Sur réception d'un ordre, une commande correspondante est envoyée par le dispositif de contrôle 10 à l'équipement électrique 11 via une liaison non représentée.

La Figure 2 présente un second système de contrôle de la consommation électrique d'un équipement électrique 21. Un dispositif de contrôle 20, de type thermostat par exemple, est apte à recevoir des ordres d'une cassette de programmation 25 via un fil pilote FP6 22. Le même fil pilote FP6 22 est utilisé en tant que sortie avec un fil de phase 23 et un fil neutre 24. L'ordre peut ainsi être transmis à d'autres appareils reliés au fil pilote FP6 22.

Toutefois, les systèmes illustrés sur les Figures 1 et 2 fonctionnent tant que tous les appareils concernés sont équipés d'un fil pilote FP6, mais des problèmes de compatibilité peuvent survenir lorsque des appareils utilisant le fil pilote FP6 et des appareils utilisant un nouveau protocole bidirectionnel sur le fil pilote FPB cohabitent dans un logement avec des équipements de délestage par exemple.

De même, dans le cas d'une installation comprenant de nouveaux appareils communiquant via des fils pilotes FPB et comprenant un gestionnaire d'énergie communiquant via un fil pilote FP6, des conflits apparaissent dans la communication des ordres.

Ainsi, il existe un besoin de disposer d'un dispositif de contrôle de la consommation électrique d'équipements électriques qui soit compatible avec l'ensemble des équipements électriques, qu'ils soient des équipements d'ancienne génération utilisant le protocole FP6 ou des équipements de nouvelle génération utilisant le protocole bidirectionnel .

La présente invention vient améliorer la situation.

Un premier aspect de l'invention concerne un dispositif de contrôle d'un équipement thermique selon la revendication 1.

Le dispositif de contrôle selon l'invention comprend ainsi deux interfaces distinctes reliées à des fils pilotes différents, ce qui permet de le rendre compatible avec l'ensemble des équipements électriques du marché, qu'ils soient d'ancienne génération utilisant un protocole unidirectionnel par exemple le protocole FP6, ou de nouvelle génération utilisant un protocole bidirectionnel FPB. En outre, le dispositif de contrôle est compatible avec des ordres envoyés par d'autres équipements de gestion de l'énergie, de type systèmes de délestage par exemple. En outre, dans le cas où deux ordres distincts sont reçus par le dispositif de contrôle, ce dernier comprend une unité de décision pour sélectionner l'un des ordres reçus. Aucune restriction n'est attachée au critère utilisé pour la sélection. Un ensemble de règles prédéterminées peut être prévu à cet effet.

Selon un mode de réalisation, les premiers et deuxième ordres peuvent appartenir à un ensemble prédéterminé de n ordres, les n ordres étant classés par ordre de priorité, et l'unité de décision peut sélectionner l'ordre parmi les premiers et deuxièmes ordres pour lequel le niveau de priorité est le plus haut. Lorsqu'un premier ordre et un deuxième ordre distincts et de même niveau de priorité sont reçus respectivement sur les première et deuxième interfaces, l'unité de décision est apte à sélectionner le premier ordre.

Aucune restriction n'est attachée au nombre de niveaux de priorité. On peut par exemple prévoir de séparer de manière binaire les ordres en ordres dits « prioritaires » et en ordres dits « non prioritaires ». De manière alternative, au moins trois niveaux de priorité peuvent être prévus.

Dans une variante, lorsqu'un premier ordre et un deuxième ordre distincts et de même niveau de priorité sont reçus respectivement sur les première et deuxième interfaces, l'unité de décision est apte à sélectionner l'ordre en fonction de l'interface de réception de l'ordre. La sélection de l'interface peut être opérée sur la base d'un critère prédéterminé en fonction de la nature de l'ordre (programmation, dérogation, ordre tarifaire, alarme).

En complément ou en variante, le dispositif de contrôle peut comprendre en outre une interface utilisateur apte à recevoir un troisième ordre, et l'unité de décision peut être apte à sélectionner un ordre parmi les premier, deuxième et troisième ordres.

Le dispositif de contrôle peut ainsi gérer trois ordres à la fois, pouvant provenir potentiellement d'un utilisateur, d'un gestionnaire d'énergie, d'une cassette de programmation ou encore d'autres équipements électriques. La sélection d'un ordre peut ainsi être opérée sur la base d'un critère prédéterminé.

En complément, si un troisième ordre est reçu sur l'interface utilisateur et qu'au moins un autre ordre est reçu sur la première ou sur la seconde interface, l'ordre sélectionné par l'unité de décision peut être par défaut le troisième ordre.

Ce mode de réalisation permet de favoriser les ordres reçus directement par l'utilisateur, par exemple via un boîtier de commande du dispositif de contrôle.

En complément ou en variante, lorsqu'un ordre prioritaire est reçu sur la première ou sur la seconde interface, l'ordre sélectionné par l'unité de sélection est l'ordre prioritaire.

Aucune restriction n'est attachée à ce qui est considéré comme un ordre prioritaire. Par exemple, il peut s'agir d'un ordre de coupure totale ou partielle de l'alimentation électrique de l'équipement électrique, cet ordre pouvant être issu d'un système de délestage par exemple.

Dans un mode de réalisation de l'invention, le dispositif de contrôle peut comprendre en outre un détecteur de présence, la seconde interface peut être apte à recevoir un deuxième ordre depuis un dispositif de commande sans fil via le second fil pilote, et, si une présence est détectée par le détecteur de présence, le deuxième ordre reçu sur la seconde interface peut ne pas être pris en compte par l'unité de décision pour sélectionner l'ordre.

Le dispositif de commande sans fil peut être une cassette de programmation apte à communiquer par radiofréquences par exemple. Ainsi, l'invention ne prend pas en compte des ordres transmis à distance lorsque l'utilisateur est présent dans son logement.

Selon une réalisation de l'invention, le dispositif de contrôle peut comprendre en outre un raccord électrique apte à relier électriquement les premier et second fils pilotes.

Il est ainsi rendu possible de recopier un ordre reçu sur une première interface sur un fil pilote relié à l'autre interface, à l'intention par exemple d'autres équipements électriques esclaves. Une telle réalisation permet de mutualiser un dispositif de commande entre plusieurs équipements électriques. Par exemple, l'équipement électrique comprend une cassette de programmation commandant le dispositif de contrôle via une interface, et les ordres reçus sont recopiés sur le fil pilote de l'autre interface pour une transmission du même ordre vers d'autres équipements.

Dans un mode de réalisation, l'une au moins parmi les première et seconde interfaces peut en outre être apte à transmettre des informations via un fil pilote parmi les premier et second fils pilotes, et le fil pilote peut être un fil pilote bidirectionnel.

Ainsi, l'invention met à profit l'utilisation d'un protocole bidirectionnel en vue d'échanger des informations entre dispositifs de contrôle par exemple. Ces informations peuvent être des ordres, ou encore des données de détection de présence, des données de détection d'ouverture de fenêtres, des données météorologiques, etc.

Selon un mode de réalisation, les premier et deuxième fils pilotes sont des fils pilotes bidirectionnels FPB.

Les fils pilotes numériques bidirectionnels pouvant être rétrogradés pour transporter des ordres selon le protocole FP6, ce mode de réalisation permet au dispositif de contrôle d'être compatible avec l'ensemble des équipements du marché.

Un deuxième aspect de l'invention concerne un système de contrôle d'un équipement thermique comprenant un dispositif de contrôle selon le premier aspect de l'invention, et un dispositif gestionnaire d'énergie relié à la première interface du dispositif de contrôle via le premier fil pilote.

Un troisième aspect de l'invention concerne un procédé de contrôle d'un équipement thermique selon la revendication 13.

Un quatrième aspect de l'invention concerne un programme d'ordinateur comportant des instructions pour la mise en œuvre du procédé selon le troisième aspect de l'invention, lorsque ce programme est exécuté par un processeur.

D'autres caractéristiques et avantages de l'invention apparaîtront à l'examen de la description détaillée ci-après, et des dessins annexés sur lesquels:
- la figure 1 présente un premier système de contrôle de la consommation électrique d'un équipement électrique selon l'art antérieur ;
- la figure 2 présente un deuxième système de contrôle de la consommation électrique d'un équipement électrique selon l'art antérieur ;
- la figure 3 illustre un équipement électrique comprenant un dispositif de contrôle, selon un premier mode de réalisation de l'invention;
- la figure 4 illustre un équipement électrique 31 comprenant un dispositif de contrôle, selon un premier mode de réalisation de l'invention ;
- la figure 5 présente un dispositif de contrôle selon un mode de réalisation de l'invention ;
- la figure 6 est un diagramme illustrant les étapes d'un procédé selon un mode de réalisation de l'invention ;
- la figure 7 présente une première installation électrique comprenant des dispositifs de contrôle selon un mode de réalisation de l'invention ;
- la figure 8 présente une deuxième installation électrique comprenant des dispositifs de contrôle selon un mode de réalisation de l'invention.

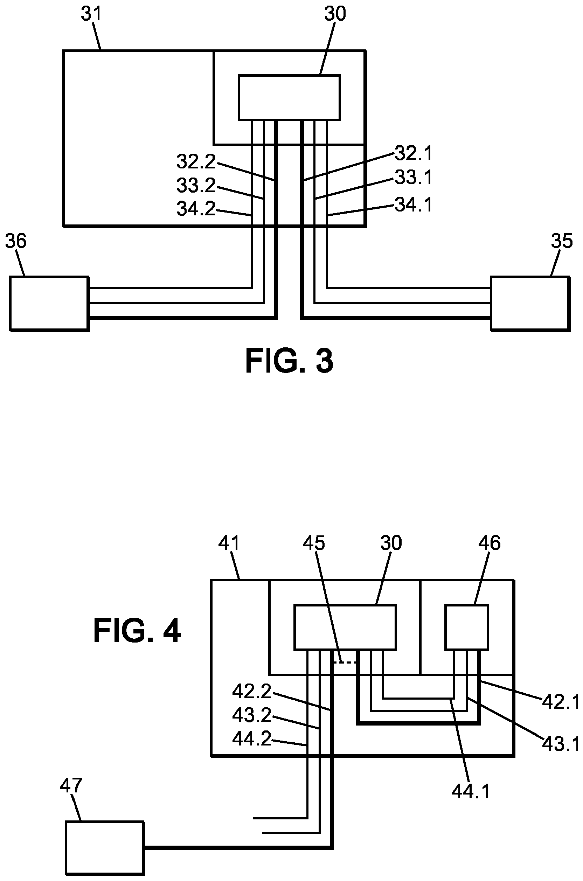

La figure 3 présente un équipement électrique 31 comprenant un dispositif de contrôle 30, selon un premier mode de réalisation de l'invention.

Comme illustré, le dispositif de contrôle 30 peut comprendre une première interface et une deuxième interface de communication par des fils pilotes FPB 32.1 et 32.2 respectifs. Les interfaces sont en outre reliées à des fils de phases 33.1 et 33.2 respectifs, ainsi qu'à des fils neutres 34.1 et 34.2 respectifs. A noter que les fils pilotes FPB peuvent être rétrogradés afin de communiquer via le protocole FP6, de manière unidirectionnelle. Un fil pilote FPB peut ainsi permettre de communiquer via le protocole FP6 ou via le protocole bidirectionnel et le dispositif de contrôle selon l'invention est ainsi compatible avec tout équipement électrique, ancien ou nouveau, et avec tout gestionnaire d'énergie.

L'utilisation des liaisons par fils pilotes FP6 et FPB est donnée à titre illustratif uniquement. En effet, l'invention s'applique plus largement à d'autres liaisons filaires, analogiques ou numériques, unidirectionnelles ou bidirectionnelles.

Le dispositif de contrôle 30 est relié à une première entité 35 via la première interface et le premier fil pilote 32.1 et est relié à une seconde entité 36 via la deuxième interface et le second fil pilote 32.2.

Selon un premier exemple, la première entité 35 peut être un équipement électrique d'ancienne génération (ou plusieurs autres équipements électriques anciens), comprenant un thermostat apte à communiquer via le protocole FP6, qui est unidirectionnel, et la seconde entité 36 peut être un gestionnaire d'énergie transmettant des ordres de manière unidirectionnelle selon le protocole FP6.

Lorsque la première entité 35 est un équipement électrique esclave utilisant le protocole FP6, le dispositif de contrôle peut transmettre les ordres reçus du gestionnaire d'énergie 36 par protocole FP6, à la première entité. A cet effet, comme détaillé dans ce qui suit, les premiers et seconds fils pilotes 32.1 et 32.2 peuvent être reliés par un raccord électrique.

En revanche, lorsque la première entité 35 est un équipement électrique source, ce dernier peut transmettre des ordres via le protocole FP6 au dispositif de contrôle 30. Dans ce cas, le dispositif de contrôle 30 peut éventuellement recevoir deux ordres distincts. Comme détaillé dans ce qui suit, le dispositif de contrôle comprend une unité de décision permettant de sélectionner l'un des ordres reçus.

Selon un deuxième exemple, la première entité 35 peut être un équipement électrique nouvelle génération (ou plusieurs autres équipements électriques nouvelle génération), comprenant un thermostat apte à communiquer via le protocole bidirectionnel, et la seconde entité 36 peut être un gestionnaire d'énergie transmettant des ordres de manière unidirectionnelle selon le protocole FP6.

Ainsi, selon le deuxième exemple, le dispositif de contrôle 30 peut transférer un ordre reçu du gestionnaire d'énergie 36 à la première entité 35, ou peut recevoir des ordres de la première entité 35. Le dispositif de contrôle peut ainsi recevoir deux ordres distincts sur ses deux interfaces et comprend à cet effet une unité de décision détaillée dans ce qui suit.

Selon un troisième exemple du mode de réalisation de la Figure 3, la première entité 35 peut être un équipement électrique nouvelle génération (ou plusieurs autres équipements électriques nouvelle génération), comprenant un thermostat apte à communiquer via le protocole bidirectionnel, et la seconde entité 36 peut être un équipement électrique ancienne génération (ou plusieurs autres équipements électriques ancienne génération), comprenant un thermostat apte à recevoir des ordres du dispositif de contrôle 30 via le protocole FP6.

La seconde entité 36 est ainsi un équipement électrique esclave et les ordres reçus par le dispositif de contrôle 30 depuis la première entité 35 peuvent être transmis à la seconde entité 36.

La Figure 4 illustre un équipement électrique 41 comprenant un dispositif de contrôle 30, selon un deuxième mode de réalisation de l'invention.

Le dispositif de contrôle 30 comprend, comme précédemment expliqué, une première et une deuxième interfaces, connectées respectivement à des fils pilotes FPB 42.1 et 42.2 respectifs, à des fils de phase 43.1 et 43.2 respectifs et à des fils neutres 44.1 et 44.2 respectifs.

Dans le mode de réalisation de la figure 4, l'équipement électrique 41 comprend un système de cassette amovible 46 relié au dispositif de contrôle 30 via le premier fil pilote 42.1 et apte à communiquer avec le dispositif de contrôle 30 par le protocole FP6 unidirectionnel en vue d'envoyer des ordres, ou par le protocole FPB bidirectionnel en vue d'envoyer et de recevoir des informations du le dispositif de contrôle 30, les informations pouvant être des ordres ou des mesures issues de capteurs.

Le système de cassette amovible peut comprendre :
- un programmateur ;
- une passerelle de communication sans fil (radiofréquence) en vue de communiquer avec d'autres équipements électriques du logement (pour échanger des ordres, des mesures, ou toute autre donnée) ;
- une interface de communication Wi-fi pour communiquer avec une passerelle Wi-fi ;
- des capteurs ou actionneurs permettant d'étendre les fonctionnalités de l'équipement électrique 41.

La deuxième interface du dispositif de contrôle 30 peut être reliée via le second fil pilote 42.2 à un gestionnaire d'énergie pour recevoir des ordres selon le protocole FP6, ou bien à un autre équipement du logement pour transmettre et/ou recevoir des ordres selon le protocole FP6 ou FPB.

Le dispositif de contrôle peut en outre comprendre un raccord électrique 45 optionnel reliant le premier fil pilote 42.1 et le second fil pilote 42.2 ce qui permet avantageusement de recopier un ordre reçu via l'un des fils pilotes sur l'autre fil pilote, l'ordre pouvant ainsi être transmis à d'autres équipements électriques esclaves.

Le raccord électrique 45 peut être réalisé de plusieurs manières :
- par recopie électronique par le dispositif de contrôle d'un ordre reçu sur le premier fil pilote 42.1 sur l'autre fil pilote 42.2 ;
- en reliant par une liaison électrique (de type « domino » par exemple) les deux fils pilotes 42.1 et 42.2. Dans ce cas, un câble d'alimentation du dispositif de contrôle peut comprendre les deux fils pilotes 42.1 et 42.1 ainsi qu'un seul des fils de phase 43.1 et 43.2, et un seul des fils neutres 44.1 et 44.2, ce qui permet de réduire le coût du dispositif de contrôle 30 ;
- ou, de manière préférentielle, en insérant un cavalier électrique dans le dispositif de contrôle 30 permettant de faire la jonction entre les fils pilotes 42.1 et 42.2 directement sur une carte électronique du dispositif de contrôle 30. A cet effet, un emplacement peut être prévu dans un boîtier du dispositif de contrôle pour accueillir le cavalier électrique.

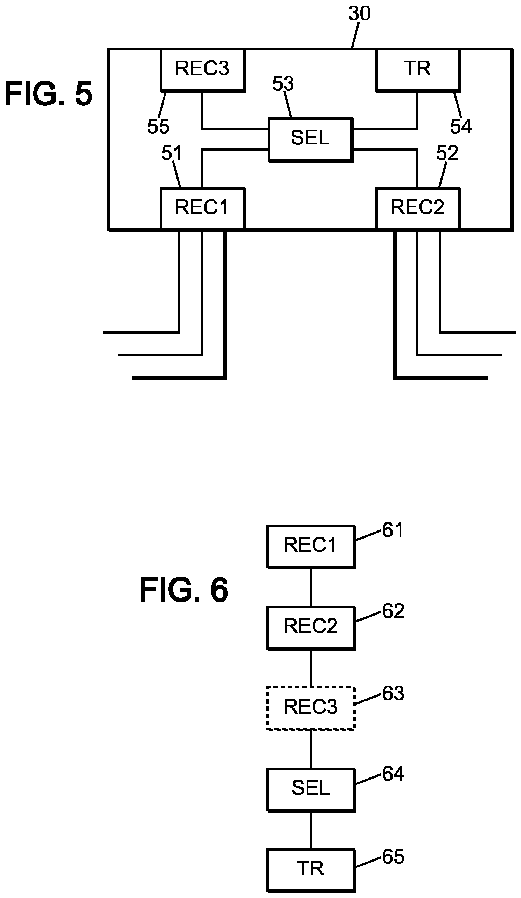

La Figure 5 illustre un dispositif de contrôle 30 selon un mode de réalisation de l'invention.

Le dispositif de contrôle 30 comprend une première interface 51 reliée au premier fil pilote et apte à recevoir un premier ordre selon le protocole FP6 ou FPB, ainsi qu'une deuxième interface 52 reliée au second fil pilote et apte à recevoir un deuxième ordre selon le protocole FP6 ou FPB.

Le dispositif de contrôle comprend en outre une unité de décision 53 apte à sélectionner, lorsqu'un premier ordre et un deuxième ordre sont reçus respectivement sur les première et deuxième interfaces 51 et 52, un ordre parmi au moins les premier et deuxième ordres.

Une commande est ensuite générée par une unité de transmission 54 en fonction de l'ordre sélectionné, et la commande est transmise à l'équipement électrique intégrant le dispositif de contrôle 30.

Aucune restriction n'est attachée au critère utilisé pour la sélection d'un ordre, et des exemples sont donnés dans ce qui suit à titre illustratif uniquement.

Chaque interface 51 ou 52 peut recevoir un ordre dictant à l'appareil électrique un niveau de consommation électrique à adopter. Dans ce cas, il peut être prévu que l'ordre sélectionné est associé au niveau de consommation électrique minimal parmi les niveaux de consommation électriques respectivement associés avec les premier et deuxième ordres. Les ordres sont ainsi pré-classés par ordre décroissant de consommation électrique, à savoir : confort, confort -1°C, confort -2°C, économie, hors-gel, arrêt. Un tel exemple de critère de sélection permet de favoriser des économies d'énergie.

De manière alternative, il peut être prévu que les ordres soient sélectionnés en fonction de niveaux de priorité qui leur sont respectivement associés. On peut par exemple prévoir deux niveaux de priorité : un niveau « prioritaire » et un niveau « non prioritaire ». Dans ce cas, si un ordre prioritaire et un ordre non-prioritaire sont reçus par le dispositif de contrôle 30, l'ordre prioritaire est sélectionné par l'unité de décision 53. En variante, au moins trois niveaux de priorité peuvent être prévus, auquel cas l'ordre ayant le niveau de priorité le plus élevé est sélectionné.

Lorsque deux ordres de même niveau de priorité sont reçus, il peut être prévu que tout ordre reçu sur la première interface 51 est considéré comme prioritaire par rapport à un ordre reçu sur la deuxième interface 52, et l'unité de décision 53 sélectionne dans ce cas l'ordre reçu sur la première interface 51.

Selon un autre mode de réalisation, lorsque le dispositif de contrôle 30 reçoit des ordres sur les première et deuxième interfaces 51 et 52, l'unité de sélection 53 peut sélectionner un ordre en fonction de l'interface de réception. Par exemple, la première interface peut être favorisée, et en cas de réception de plusieurs ordres sur les interfaces 51 et 52, l'ordre reçu sur la première interface 51 peut être sélectionné. Ainsi, un ordre reçu sur la deuxième interface 52 est uniquement utilisé pour générer une commande lorsqu'aucun ordre n'est reçu sur la première interface.

De manière complémentaire, le dispositif de contrôle peut en outre comprendre une interface utilisateur 55 apte à recevoir un troisième ordre. Par exemple, l'interface utilisateur peut être un boîtier de commande par lequel un utilisateur peut directement sélectionner un programme correspondant à un ordre. Dans ce cas, trois ordres distincts peuvent potentiellement être reçus par le dispositif de contrôle 30, et l'unité de décision 53 est apte à sélectionner un ordre parmi les trois ordres reçus.

A cet effet, il peut être prévu que tout ordre reçu sur l'interface utilisateur 55 est prioritaire par rapport aux ordres reçus sur les interfaces 51 et 52. En complément, l'ordre reçu sur l'interface utilisateur 55 est prioritaire pendant une durée ti donnée durant laquelle les ordres reçus sur les interfaces 51 et 52 ne sont pas pris en compte.

Une exception à ce principe peut être la réception sur l'interface 51 ou 52 d'un ordre prioritaire, auquel cas l'ordre prioritaire peut être systématiquement sélectionné pour générer une commande. A titre d'exemple, un ordre de délestage requérant l'arrêt de l'appareil électrique peut être considéré comme prioritaire.

En variante, lorsque trois ordres sont reçus respectivement sur les interfaces 51, 52 et 55, des niveaux de priorité étant respectivement associés aux ordres reçus, l'ordre ayant le niveau de priorité le plus élevé peut être sélectionné par l'unité de décision 53.

Selon un mode de réalisation, sur réception d'un ordre prioritaire de coupure sur la première interface 51 (par exemple) et, dans le même temps (ou dans un intervalle temporel prédéterminé), d'un ordre sur l'interface utilisateur 55, l'utilisateur peut toujours utiliser le boîtier de commande (l'interface utilisateur 55) pendant une durée t₂ prédéterminée, et ce afin de permettre à l'utilisateur de finaliser un réglage, et ce malgré l'arrêt de la consommation électrique de l'équipement électrique en raison de l'ordre prioritaire.

Selon un autre mode de réalisation, le dispositif de contrôle 30 peut en outre comprendre un détecteur de présence (non représenté sur la Figure 5), et l'une parmi les première et deuxième interfaces 51 et 52 est reliée par le fil pilote à une cassette de programmation qui est apte à transmettre des ordres qui sont reçus à distance (comme c'est le cas sur la Figure 4 avec la cassette de programmation 46). Dans ce cas, les ordres reçus à distance ne sont pas pris en compte lorsque le détecteur de présence détecte la présence d'un utilisateur.

Selon encore une autre réalisation, la deuxième interface 52 est dédiée à l'échange d'informations entre plusieurs dispositifs de contrôle de différents équipements électriques, afin de permettre une synchronisation des équipements électriques par exemple.

L'unité de décision 53 peut opérer de la même manière lorsque les premières et deuxièmes interfaces 51 et 52 sont reliées par un raccord électrique, tel que le raccord électrique 45 de la Figure 4 par exemple.

La Figure 5 est un diagramme illustrant les étapes générales d'un procédé selon un mode de réalisation de l'invention.

A une étape 61, la première interface 51 reçoit un premier ordre et à une étape 62, la deuxième interface 52 reçoit un deuxième ordre. Aucune restriction n'est attachée à l'intervalle temporel entre la réception des deux ordres. Par ailleurs, le deuxième ordre peut être reçu avant le premier ordre.

A une étape 64, l'unité de décision 53 est apte à sélectionner l'un des ordres reçus, de la manière précédemment décrite.

A une étape 65, une commande est générée sur la base de l'ordre sélectionné et la commande est transmise par l'unité de transmission 54 à l'équipement électrique afin qu'il adapte sa consommation électrique.

Le procédé peut en outre comprendre une étape optionnelle 63 de réception d'un troisième ordre sur l'interface utilisateur 55. Dans ce cas, à l'étape 64, l'unité de décision 53 sélectionne un ordre parmi l'ensemble des ordres reçus.

Il peut également être prévu de recevoir un seul ordre dans un intervalle temporel donné, auquel cas une commande est générée sur la base de cet ordre. De plus, l'invention prévoit également la réception d'un ordre sur l'une des interfaces 51 et 52 seulement, et la réception d'un autre ordre sur l'interface utilisateur 55. Dans ce cas, l'unité de décision 53 est également apte à sélectionner l'un des ordres reçus.

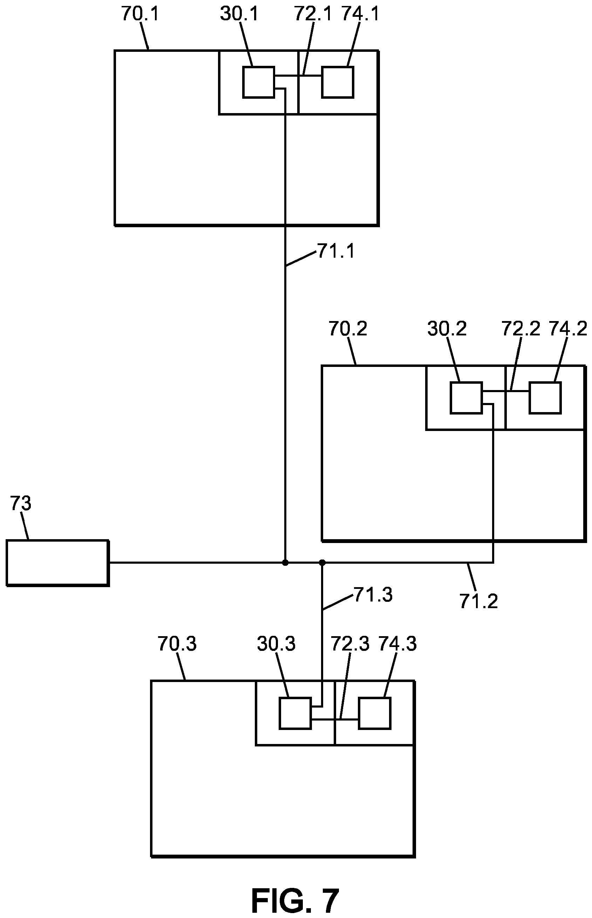

La Figure 7 illustre un premier exemple d'installation électrique incluant plusieurs dispositifs de contrôle selon l'invention.

Dans cet exemple, trois équipements électriques 70.1, 70.2 et 70.3 sont équipés de dispositifs de contrôle 30.1, 30.2 et 30.3 respectifs selon l'invention.

Chaque dispositif de contrôle 30.1, 30.2 et 30.3 est relié par un premier fil pilote 71.1, 71.2 et 71.3, de type FPB, à un même gestionnaire d'énergie 73. Selon cet exemple, le gestionnaire d'énergie 73 est apte à générer des ordres via le protocole FP6, qui est supporté par les premiers fils pilotes FPB 71.1, 71.2 et 71.3.

En outre les dispositifs de contrôle 30.1, 30.2 et 30.3 sont reliés par leurs seconds fil pilotes FPB 72.1, 72.2 et 72.3, via un protocole FPB, à des cassettes de programmation respectives 74.1, 74.2 et 74.3 aptes à communiquer entre elles par radiofréquences, afin par exemple d'échanger des informations. Ces informations peuvent être des ordres (consignes de température), des informations de détection d'ouverture de fenêtre, des informations météorologiques, etc.

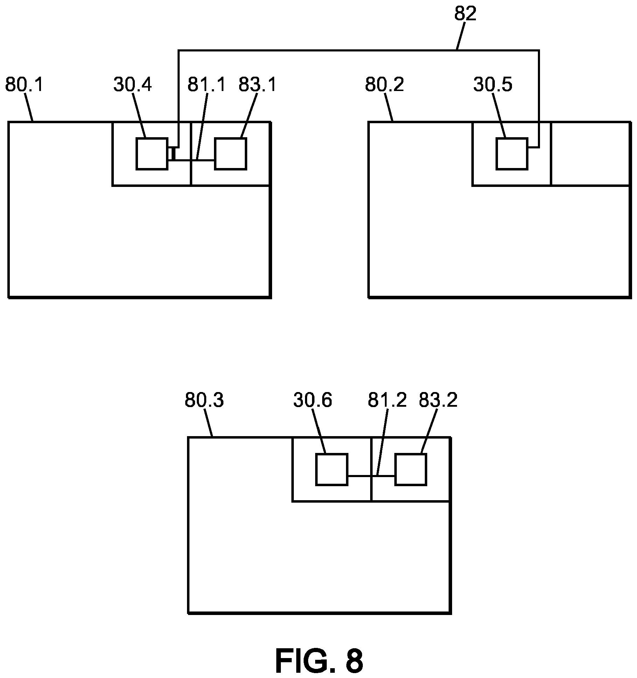

La Figure 8 illustre un deuxième exemple d'installation électrique incluant plusieurs dispositifs de contrôle selon l'invention.

L'installation électrique comprend un premier équipement électrique 80.1, un deuxième équipement électrique 80.2 et un troisième équipement électrique 80.3.

Le premier équipement électrique 80.1 et le troisième équipement électrique 80.3 sont des équipements électriques de nouvelle génération et peuvent ainsi comprendre des cassettes de programmation respectives 83.1 et 83.2, aptes à communiquer entre elles par radiofréquences par exemple. Le deuxième équipement électrique 80.2 est un équipement électrique ancienne génération pouvant uniquement recevoir des ordres via le protocole FP6.

Le premier équipement électrique 80.1 comprend un dispositif de contrôle 30.4 selon l'invention. Le dispositif de contrôle 30.4 comprend une première interface reliée à la cassette de programmation 83.1 par un fil pilote 81.1, de type FPB par exemple et est ainsi apte à communiquer avec un troisième dispositif de contrôle 30.6 relié à la cassette de programmation 83.2 par un fil pilote 81.2, de type FPB par exemple.

En outre, le dispositif de contrôle 30.4 comprend une deuxième interface reliée à un fil pilote 82 de type FPB, connecté à une interface d'un dispositif de contrôle 30.5 ancienne génération du deuxième équipement électrique.

Dans la mesure où le dispositif de contrôle 30.5 peut uniquement recevoir des ordres via le protocole FP6, les liaisons 82 et 81.1, qui sont des fils pilotes FPB, sont rétrogradées pour transporter des ordres selon le protocole FP6. Les ordres transmis au dispositif de contrôle 30.5 sont donc unidirectionnels.

Un raccord électrique peut être prévu entre les fils pilotes 82 et 81.1 ce qui permet de propager les ordres échangés entre les équipements 80.1 et 80.3 nouvelle génération vers l'équipement 80.2 ancienne génération.

Les exemples d'installations électriques des figures 7 et 8 sont donnés uniquement à titre illustratif et ne sauraient restreindre l'invention à ces seuls exemples. Le dispositif de contrôle selon l'invention est ainsi compatible avec tout type d'équipement électrique, ancienne génération et nouvelle génération, avec tout gestionnaire d'énergie et avec toute cassette de programmation. Comme précédemment détaillé, il peut en outre recevoir directement des ordres via une interface utilisateur de type boîtier de commande.

## Revendications

1. Dispositif (30) de contrôle d'un équipement thermique (31), comprenant :
- une première interface (51) apte à recevoir un premier ordre via un premier fil pilote (42.1) ;
- une seconde interface (52) apte à recevoir un deuxième ordre ; et
- une unité de transmission (54) d'une commande à l'équipement thermique ;
le dispositif étant **caractérisé en ce que** :
- la seconde interface (52) est apte à recevoir le deuxième ordre via un second fil pilote (42.2) ;
- le dispositif comporte en outre une unité de décision (53) apte à sélectionner, lorsqu'un premier ordre et un deuxième ordre sont reçus respectivement sur les première et deuxième interfaces, un ordre parmi au moins les premier et deuxième ordres ; et
- la commande transmise par l'unité de transmission est générée à partir de l'ordre sélectionné.

2. Dispositif (30) selon la revendication 1, dans lequel les premiers et deuxième ordres appartiennent à un ensemble prédéterminé de n ordres, lesdits n ordres étant classés par ordre de priorité, et dans lequel l'unité de décision (53) sélectionne l'ordre parmi les premier et deuxième ordres pour lequel le niveau de priorité est le plus haut.

3. Dispositif selon la revendication 2, dans lequel lorsqu'un premier ordre et un deuxième ordre distincts et de même niveau de priorité sont reçus respectivement sur les première (51) et seconde (52) interfaces, l'unité de décision (53) est apte à sélectionner le premier ordre.

4. Dispositif selon la revendication 1, dans lequel lorsqu'un premier ordre et un deuxième ordre distincts et de même niveau de priorité sont reçus respectivement sur les première (51) et seconde (52) interfaces, l'unité de décision (53) est apte à sélectionner l'ordre en fonction de l'interface de réception de l'ordre.

5. Dispositif selon la revendication 1, comprenant en outre une interface utilisateur (55) apte à recevoir un troisième ordre, et dans lequel l'unité de décision (53) est apte à sélectionner un ordre parmi les premier, deuxième et troisième ordres.

6. Dispositif selon la revendication 5, dans lequel si un troisième ordre est reçu sur l'interface utilisateur (55) et qu'au moins un autre ordre est reçu sur la première ou sur la seconde interface, l'ordre sélectionné par l'unité de décision est par défaut le troisième ordre.

7. Dispositif selon la revendication 5 ou 6, lorsqu'un ordre prioritaire est reçu sur la première ou sur la seconde interface (51, 52), l'ordre sélectionné par l'unité de sélection (53) est ledit ordre prioritaire.

8. Dispositif selon l'une des revendications précédentes, comprenant en outre un détecteur de présence,
dans lequel la seconde interface (52) est apte à recevoir un deuxième ordre depuis un dispositif de commande sans fil (46) via le second fil pilote,
et si une présence est détectée par le détecteur de présence, le deuxième ordre reçu sur la seconde interface n'est pas pris en compte par l'unité de décision pour sélectionner l'ordre.

9. Dispositif selon l'une des revendications précédentes, comprenant en outre un raccord électrique (45) apte à relier électriquement les premier et second fils pilotes.

10. Dispositif selon l'une des revendications précédentes, dans lequel l'une au moins parmi les première et seconde interfaces (51, 52) est en outre apte à transmettre des informations via un fil pilote parmi les premier et second fils pilotes, et dans lequel ledit fil pilote est un fil pilote bidirectionnel.

11. Dispositif selon l'une des revendications précédentes, dans lequel les premier et deuxième fils pilotes sont des fils pilotes bidirectionnels.

12. Système de contrôle d'un équipement thermique comprenant un dispositif de contrôle (30) selon l'une des revendications 1 à 11, et un dispositif gestionnaire d'énergie (36, 47, 73) relié à la première interface du dispositif de contrôle via le premier fil pilote.

13. Procédé de contrôle d'un équipement thermique (31), comprenant les étapes suivantes:
- réception d'un premier ordre par une première interface (51) via un premier fil pilote (42.1) ;
- réception d'un deuxième ordre par une seconde interface (52) ;
- transmission d'une commande audit équipement thermique,
le procédé étant **caractérisé en ce que** :
- la réception du deuxième ordre par la seconde interface (52) est effectuée via un second fil pilote (42.2) ;
- le procédé comporte en outre une étape de sélection d'un ordre parmi au moins les premier et deuxième ordres, par une unité de décision (53) ; et
- la commande transmise à l'équipement thermique est générée à partir de l'ordre sélectionné.

14. Programme d'ordinateur comportant des instructions pour la mise en œuvre de toutes les étapes du procédé selon la revendication 13, lorsque ce programme est exécuté par un processeur.

## Patentansprüche

1. Vorrichtung (30) zum Steuern einer thermischen Einrichtung (31), aufweisend:
- eine erste Schnittstelle (51), die geeignet ist, einen ersten Befehl über eine erste Steuerleitung (42.1) zu empfangen,
- eine zweite Schnittstelle (52), die geeignet ist, einen zweiten Befehl zu empfangen, und
- eine Einheit zum Übermitteln (54) einer Steueranweisung an die thermische Einrichtung,
wobei die Vorrichtung **dadurch gekennzeichnet ist, dass**:
- die zweite Schnittstelle (52) geeignet ist, den zweiten Befehl über eine zweite Steuerleitung (42.2) zu empfangen,
- die Vorrichtung ferner eine Entscheidungseinheit (53) aufweist, die geeignet ist, wenn ein erster Befehl und ein zweiter Befehl an der ersten bzw. der zweiten Schnittstelle empfangen werden, einen Befehl von mindestens dem ersten und dem zweiten Befehl auszuwählen, und
- die von der Übermittlungseinheit übermittelte Steueranweisung aus dem ausgewählten Befehl erzeugt wird.

2. Vorrichtung (30) gemäß Anspruch 1, wobei der erste und der zweite Befehl zu einem vorbestimmten Satz von n Befehlen gehören, wobei die n Befehle nach Prioritätsreihenfolge klassifiziert sind, und wobei die Entscheidungseinheit (53) unter dem ersten und dem zweiten Befehl den Befehl auswählt, für den die Prioritätsstufe am höchsten ist.

3. Vorrichtung gemäß Anspruch 2, wobei, wenn ein erster Befehl und ein zweiter Befehl, die unterschiedlich sind und die gleiche Prioritätsstufe haben, an der ersten (51) bzw. der zweiten (52) Schnittstelle empfangen werden, die Entscheidungseinheit (53) geeignet ist, den ersten Befehl auszuwählen.

4. Vorrichtung gemäß Anspruch 1, wobei, wenn ein erster Befehl und ein zweiter Befehl, die unterschiedlich sind und die gleiche Prioritätsstufe haben, an der ersten (51) bzw. der zweiten (52) Schnittstelle empfangen werden, die Entscheidungseinheit (53) geeignet ist, den Befehl in Abhängigkeit von der Empfangsschnittstelle des Befehls auszuwählen.

5. Vorrichtung gemäß Anspruch 1, ferner aufweisend eine Benutzerschnittstelle (55), die geeignet ist, einen dritten Befehl zu empfangen, und wobei die Entscheidungseinheit (53) geeignet ist, einen Befehl aus dem ersten, dem zweiten und dem dritten Befehl auszuwählen.

6. Vorrichtung gemäß Anspruch 5, wobei, wenn ein dritter Befehl an der Benutzerschnittstelle (55) empfangen wird und mindestens ein anderer Befehl an der ersten oder an der zweiten Schnittstelle empfangen wird, der von der Entscheidungseinheit ausgewählte Befehl standardmäßig der dritte Befehl ist.

7. Vorrichtung gemäß Anspruch 5 oder 6, wobei, wenn ein Prioritätsbefehl an der ersten oder an der zweiten Schnittstelle (51, 52) empfangen wird, der von der Auswahleinheit (53) ausgewählte Befehl der Prioritätsbefehl ist.

8. Vorrichtung gemäß einem der vorhergehenden Ansprüche, ferner aufweisend einen Anwesenheitsdetektor,
wobei die zweite Schnittstelle (52) geeignet ist, einen zweiten Befehl von einer drahtlosen Steuervorrichtung (46) über die zweite Steuerleitung zu empfangen,
und wenn eine Anwesenheit durch den Anwesenheitsdetektor detektiert wird, der zweite Befehl, der an der zweiten Schnittstelle empfangen wird, von der Entscheidungseinheit zum Auswählen des Befehls nicht berücksichtigt wird.

9. Vorrichtung gemäß einem der vorhergehenden Ansprüche, ferner aufweisend einen elektrischen Anschluss (45), der geeignet ist, die erste und die zweite Steuerleitung elektrisch zu verbinden.

10. Vorrichtung gemäß einem der vorhergehenden Ansprüche, wobei mindestens eine von der ersten und der zweiten Schnittstelle (51, 52) ferner geeignet ist, Informationen über eine Steuerleitung von der ersten und der zweiten Steuerleitung zu übermitteln, und wobei die Steuerleitung eine bidirektionale Steuerleitung ist.

11. Vorrichtung gemäß einem der vorhergehenden Ansprüche, wobei die erste und die zweite Steuerleitung bidirektionale Steuerleitungen sind.

12. Steuersystem für eine thermische Einrichtung, aufweisend eine Steuervorrichtung (30) gemäß einem der Ansprüche 1 bis 11 und eine Energiemanagementvorrichtung (36, 47, 73), die über die erste Steuerleitung mit der ersten Schnittstelle der Steuervorrichtung verbunden ist.

13. Verfahren zum Steuern einer thermischen Einrichtung (31), aufweisend die folgenden Schritte:
- Empfangen eines ersten Befehls durch eine erste Schnittstelle (51) über eine erste Steuerleitung (42.1),
- Empfangen eines zweiten Befehls über eine zweite Schnittstelle (52),
- Übermitteln einer Steueranweisung an die thermische Einrichtung,
wobei das Verfahren **dadurch gekennzeichnet ist, dass**:
- das Empfangen des zweiten Befehls durch die zweite Schnittstelle (52) über eine zweite Steuerleitung (42.2) erfolgt,
- das Verfahren ferner einen Schritt des Auswählens eines Befehls aus mindestens dem ersten und dem zweiten Befehl durch eine Entscheidungseinheit (53) aufweist, und
- die an die thermische Einrichtung übermittelte Steueranweisung aus dem ausgewählten Befehl erzeugt wird.

14. Computerprogramm, aufweisend Befehle zum Durchführen aller Schritte des Verfahrens gemäß Anspruch 13, wenn das Programm von einem Prozessor ausgeführt wird.

## Claims

1. Device (30) for controlling thermal equipment (31) comprising:
- a first interface (51) able to receive a first order via a first pilot wire (42.1);
- a second interface (52) able to receive a second order; and
- a unit (54) for transmitting a command to the thermal equipment;
the device being **characterised in that**:
- the second interface (52) is able to receive the second order via a second pilot wire (42.2);
- the device comprises furthermore a decision unit (53) able to select, when a first order and a second order are received respectively on the first and second interfaces, an order from at least the first and second orders; and
- the command transmitted by the transmission unit is generated from the selected order.

2. Device (30) according to claim 1, in which the first and second orders belong to a predetermined assembly of n orders, said n orders being classed by order of priority, and in which the decision unit (53) selects the order from the first and second orders for which the level of priority is highest.

3. Device according to claim 2, in which, when a first order and second order which are separate and of the same level of priority are received respectively on the first (51) and second (52) interfaces, the decision unit (53) is able to select the first order.

4. Device according to claim 1, in which, when a first order and second order which are separate and of the same level of priority are received respectively on the first (51) and second (52) interfaces, the decision unit (53) is able to select the order as a function of the interface receiving the order.

5. Device according to claim 1, comprising furthermore a user interface (55) able to receive a third order, and in which the decision unit (53) is able to select an order from the first, second and third orders.

6. Device according to claim 5, in which, if a third order is received on the user interface (55) and at least one other order is received on the first or on the second interface, the order selected by the decision unit is by default the third order.

7. Device according to claim 5 or 6, when a priority order is received on the first or on the second interface (51, 52) the order selected by the selection unit (53) is said priority order.

8. Device according to one of the preceding claims, comprising furthermore a presence detector,
in which the second interface (52) is able to receive a second order from a wireless control device (46) via the second pilot wire,
and if a presence is detected by the presence detector, the second order received on the second interface is not taken into account by the decision unit for selecting the order.

9. Device according to one of the preceding claims, comprising furthermore an electrical connection (45) able to connect electrically the first and second pilot wires.

10. Device according to one of the preceding claims, in which one at least from the first and second interfaces (51, 52) is furthermore able to transmit information via a pilot wire from the first and second pilot wires, and in which said pilot wire is a bidirectional pilot wire.

11. Device according to one of the preceding claims, in which the first and second pilot wires are bidirectional pilot wires.

12. System for controlling thermal equipment comprising a control device (30) according to one of the claims 1 to 11, and an energy managing device (36, 47, 73) connected to the first interface of the control device via the first pilot wire.

13. Method for controlling thermal equipment (31), comprising the following steps:
- receipt of a first order by a first interface (51) via a first pilot wire (42.1);
- receipt of a second order by a second interface (52);
- transmission of a command to said thermal equipment,
the method being **characterised in that**:
- receipt of the second order by the second interface (52) is effected via a second pilot wire (42.2);
- the method comprises furthermore a step of selecting an order from at least the first and second orders, by a decision unit (53); and
- the command transmitted to the thermal equipment is generated from the selected order.

14. Computer program comprising instructions for implementing all the steps
of the method according to claim 13, when this program is executed by a processor.
